# EUROPÄISCHE PATENTANMELDUNG

(11) **EP 2 554 860 A2**
(43) Veröffentlichungstag der Anmeldung: **06.02.2013**
(21) Anmeldenummer: 12178847.5
(22) Anmeldetag: 01.08.2012
(51) Int. Cl.: F16C 25/06

(54) **Lageranordnung**

(30) Priorität: 01.08.2011 DE 102011080159
(71) Anmelder: Aktiebolaget SKF, 41 550 Göteborg (SE)
(72) Erfinder: Weidinger, Alfred, 97464 Niederwerrn (DE)
(74) Vertreter: Schonecke, Mitja

(57) **Zusammenfassung**

Die Erfindung betrifft eine Lageranordnung (1) zur Lagerung eines ersten Bauteils (2) relativ zu einem zweiten Bauteil (3), wobei die Lageranordnung (1) mindestens ein Wälzlager (4) mit mindestens einem Innenring (5) und mindestens einem Außenring (6) umfasst, wobei zwischen Innenring (5) und Außenring (6) Wälzkörper (7) angeordnet sind, wobei zwischen einem der Lagerringe (6) und einer Aufnahme (8) im ersten oder zweiten Bauteil (3) ein Ringelement (9) angeordnet ist, wobei das Ringelement (9) eine Aufnahmekammer (10) für ein Druckfluid (11) aufweist und wobei die Aufnahmekammer (10) fluidisch mit einer Quelle (12) mit unter Druck gesetztem Druckfluid (11) verbunden ist. Um bei kompakter Bauweise eine von der Betriebstemperatur möglichst unabhängige radiale Vorspannung im Wälzlager zu erreichen, sieht die Erfindung vor, dass die Aufnahmekammer (10) mit der Quelle (12) über eine Druckleitung (13) verbunden ist, wobei die Quelle (12) für unter Druck gesetztes Druckfluid (11) einen Druckbehälter (14) umfasst, in dem Druckfluid (11) eingefüllt ist, und wobei sich im Druckbehälter (14) oberhalb eines Ölpegels (P) ein unter Druck gesetztes Gas (15) befindet.

## Beschreibung

Die Erfindung betrifft eine Lageranordnung zur Lagerung eines ersten Bauteils relativ zu einem zweiten Bauteil, wobei die Lageranordnung mindestens ein Wälzlager mit mindestens einem Innenring und mindestens einem Außenring umfasst, wobei zwischen Innenring und Außenring Wälzkörper angeordnet sind, wobei zwischen einem der Lagerringe und einer Aufnahme im ersten oder zweiten Bauteil ein Ringelement angeordnet ist, wobei das Ringelement eine Aufnahmekammer für ein Druckfluid aufweist und wobei die Aufnahmekammer fluidisch mit einer Quelle mit unter Druck gesetztem Druckfluid verbunden ist.

Gattungsgemäße Lageranordnungen werden beispielsweise eingesetzt, um radiale Lasten zwischen einer Welle (erstes Bauteil) und einem Gehäuse (zweites Bauteil) zu übertragen. Im Falle der Ausgestaltung der Lageranordnung als Loslagerung werden in diesem Falle keine axialen Kräfte zwischen Welle und Gehäuse übertragen. Dabei kann es zur Herstellung einer präzisen radialen Lagerung der Welle relativ zum Gehäuse sinnvoll und notwendig sein, im Wälzlager eine definierte radiale Vorspannung aufzubauen.

Bekannt ist es, hierfür einen Lagerinnenring mit konisch ausgebildetem Innensitz (Kegelsitz) vorzusehen, der auf einem korrespondierenden konisch ausgebildeten Wellenabschnitt sitzt. Wird nun mittels eines Schrauben-Mutter-Systems eine axiale Verschiebung des Lagerinnenrings auf der Welle vorgenommen, kommt es zur radialen Aufweitung des Lagerinnenrings. Dies wiederum führt zu einer radialen Vorspannung des gesamten Lagers, weil die radiale Aufweitung des Lagerinnenrings über die Wälzkörper radial nach außen weitergegeben wird. So kann durch entsprechendes definiertes Anziehen der Mutter des Schrauben-Mutter-Systems eine gewünschte radiale Vorspannung im Lager erzeugt werden.

Nachteilig sind bei einer solchen vorbekannten Lösung zwei Aspekte:

Zum einen ist es für die Herstellung der beschriebenen Funktionalität erforderlich, ein Schrauben-Mutter-System an der Welle vorzusehen. Dies bedeutet, dass ein gewisser axialer Bauraum für das Schrauben-Mutter-System erforderlich ist, der nicht immer zur Verfügung steht.

Zum anderen besteht die Gefahr, im Falle von Temperaturerhöhungen während des Betriebs der Lageranordnung zu hohe Spannungen im Lager zu erhalten. Es können sich namentlich im Innenring hohe Zugspannungen ergeben, so dass es zu einer Beschädigung der Lagerkomponenten kommt.

Eine Lageranordnung der eingangs genannten Art ist aus der US 7 500 788 B2 bekannt. Ähnliche Lösungen offenbaren die DE 17 45 866 U und die US 2 155 919 A. Weitere teils ähnliche Konzepte zeigen die DE 18 94 952 U, die DE 349 819 A, die US 5 452 957 A, die GB 517 418 A und die JP 59 013 125 A.

Der Erfindung liegt die **Aufgabe** zugrunde, eine Lageranordnung der eingangs genannten Art so fortzubilden, dass einerseits mit geringem Platzbedarf und andererseits weitgehend unabhängig von der Temperatur im Wälzlager eine definierte radiale Vorspannung im Lager aufrechterhalten werden kann.

Die **Lösung** dieser Aufgabe durch die Erfindung ist dadurch gekennzeichnet, dass die Aufnahmekammer mit der Quelle über eine Druckleitung verbunden ist, wobei die Quelle für unter Druck gesetztes Druckfluid einen Druckbehälter umfasst, in dem Druckfluid eingefüllt ist und wobei sich im Druckbehälter oberhalb eines Ölpegels ein unter Druck gesetztes Gas befindet.

Dies erlaubt einen guten Ausgleich des Ölvolumens in der Aufnahmekammer im Falle des Anstiegs der Temperatur im Wälzlager.

Das Ringelement ist bevorzugt zwischen dem Außenring des Wälzlagers und einem zweiten Bauteil in Form eines Gehäuses angeordnet ist, wobei die Aufnahme für den Außenring dann durch eine Bohrung im Gehäuse gebildet wird.

Das Ringelement kann eine hohlzylindrische Form aufweisen. Die Aufnahmekammer im Ringelement kann dann gleichermaßen eine hohlzylindrische Form haben.

Die Breite der hohlzylindrischen Aufnahmekammer, gemessen in Richtung der Achse des Wälzlagers, beträgt bevorzugt mindestens 80 % (vorzugsweise mindestens 90 %) der Breite des angrenzenden Lagerrings. Hiermit wird eine gleichmäßig radiale Vorspannung über der Breite des Lagers sichergestellt.

Das Wälzlager ist bevorzugt ein Zylinderrollenlager. Es ist bevorzugt frei von einer Axiallagerfunktion und überträgt somit ausschließlich radiale Kräfte.

Die Erfindung schlägt also einen Dehnspannring vor, der für die gezielte Vorspannung im Wälzlager genutzt wird. Der erforderliche Bauraum ist im Vergleich einer Lagerung ohne Vorspanneinrichtung praktisch unverändert; insbesondere kann auf die relativ ausladende Konstruktion verzichtet werden, die im Stand der Technik durch das Schrauben-Mutter-System gegeben ist.

Die radiale Vorspannung im Wälzlager bleibt auch bei Temperaturerhöhung im Lager praktisch unverändert, weil dies über die Druckquelle ausgeglichen werden kann, die stets Hydraulikfluid mit einem definierten Druck zur Verfügung stellt.

Die Erfindung eignet sich grundsätzlich für alle Arten von Radiallagern. Insbesondere ist sie für Zylinderrollenlager vorgesehen. Möglich ist aber beispielsweise auch die Anwendung bei Lagerungen mittels Kugellagern oder Pendelrollenlagern.

Besonders bevorzugt kommt das vorgeschlagene Konzept bei Loslagerungen zum Einsatz.

Vorteilhaft ist weiterhin, dass Standardlager praktisch ohne wesentliche Änderung der Einbaubedingungen eingesetzt werden können.

Die Druckspannungen im Außenring des Wälzlagers ergeben sich gemäß dem vorgegebenen Druck in der Aufnahmekammer. Die Zugspannungen im Innenring liegen wie bei Standardlagern; es ergibt sich namentlich in vorteilhafter Weise keine Erhöhung der Zugspannungen im Innenring.

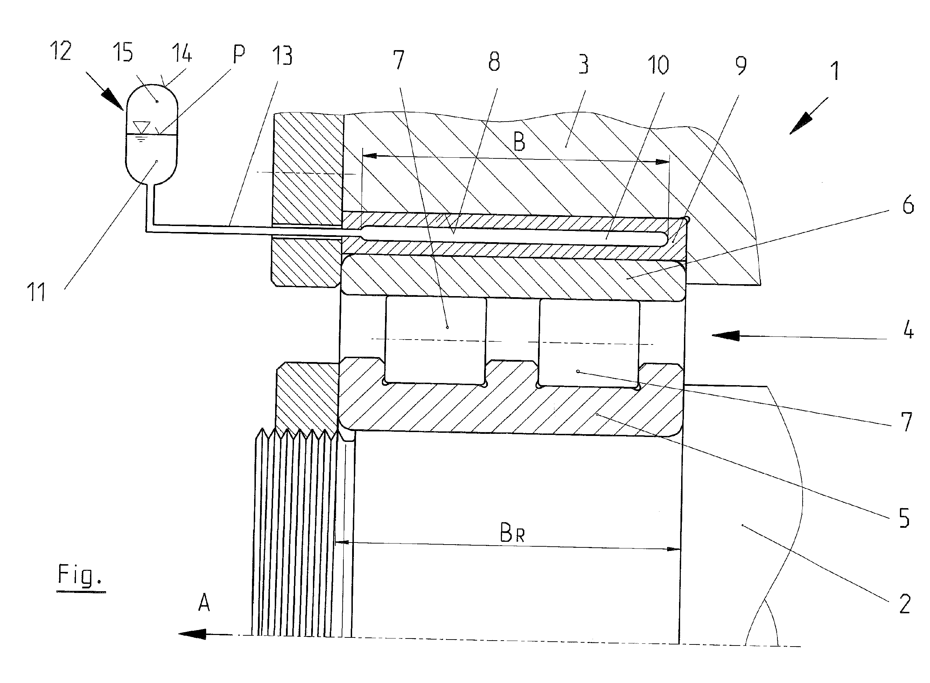

In der Zeichnung ist ein Ausführungsbeispiel der Erfindung dargestellt. Die einzige Figur zeigt einen Radialschnitt durch eine Lageranordnung, mit der eine Welle in einem Gehäuse gelagert wird.

In der Figur ist eine Lageranordnung 1 dargestellt. Mit ihr wird ein erstes Bauteil in Form einer Welle 2 relativ zu einem zweiten Bauteil in Form eines Gehäuses 3 in an sich bekannter Weise gelagert. Zur Lagerung dient ein Wälzlager 4, das vorliegend als zweireihiges Zylinderrollenlager ausgeführt ist.

Demgemäß hat das Wälzlager einen Innenring 5 und einen Außenring 6, wobei zwischen den Ringen 5, 6 zwei Reihen Wälzkörper 7 in Form von Zylinderrollen angeordnet sind.

Natürlich sind auch beliebige andere Lagerarten und -ausführungen möglich.

Das Ziel ist es, im Wälzlager 4 im Betrieb eine definierte radiale Vorspannung aufzubauen und aufrecht zu erhalten. Hierfür ist ein Ringelement 9 in die Bohrung 8 im Gehäuse 3 eingesetzt, wobei die Bohrung 8 die Aufnahme für das Wälzlager 4 im Gehäuse 3 darstellt.

Im Ringelement 9 ist eine Aufnahmekammer 10 ausgebildet, die mit einem Druckfluid (Hydrauliköl) 11 beaufschlagt werden kann. Hierzu steht die Aufnahmekammer 10 über eine Druckleitung 13 mit einer Quelle 12 für Druckfluid in Verbindung.

Die Quelle 12 für Druckfluid umfasst einen Druckbehälter 14, der beispielsweise zur Aufnahme von Fluid bis zu einem Druck von 3.000 bar ausgelegt ist. Der Druckbehälter 14 ist bis zu einer Pegelhöhe P mit Hydrauliköl gefüllt. Oberhalb des Ölpegels befindet sich Gas 15.

Über den Druck im Gas wird auch der Druck definiert, mit dem das Druckfluid 11 in die Aufnahmekammer 10 wirkt und für die radiale Aufweitung des Ringelements 9 und so für die radiale Vorspannung im Wälzlager 4 sorgt.

Demgemäß haben temperaturbedingte Erwärmungen im Wälzlager 4 keine unmittelbare Wirkung auf die Vorspannung, da Druckfluid 11 zurück in den Druckbehälter 14 fließen kann. In der Aufnahmekammer 10 herrscht vielmehr stets der voreingestellte (Öl)Druck.

Um über die Breite B_{R} des Außenrings 6 eine gleichmäßige radiale Aufweitung in Richtung A der Achse des Wälzlagers 4 sicherzustellen, weist die Aufnahmekammer 10 eine Breite B auf, die mindestens 80 % der Breite B_{R} beträgt.

Der Einbau des Wälzlagers 4 erfolgt mit möglichst kleiner Radialluft. Nach der Druckbeaufschlagung der Aufnahmekammer 10 läuft das noch kalte Wälzlager mit idealer radialer Vorspannung.

Bei der Ausdehnung durch Erwärmung wird das Druckfluid 11 in den Druckbehälter 14 zurückgedrückt (wobei nur geringe Volumenänderungen stattfinden). Die radiale Vorspannung bleibt infolge dessen nahezu konstant. Das Wälzlager gerät also auch bei Temperaturerhöhung nicht unter eine nennenswert höhere Vorspannung; spannungsbedingte Beschädigungen werden also vermieden.

Die beschriebene Technologie eines Spannrings, in den eine fluidbeaufschlagte Aufnahmekammer integriert ist, ist als solche hinlänglich bekannt. Sie kommt beispielsweise bei Hydrospanndornen (Hydrodehnspannfutter) in Werkzeugmaschinen zum Einsatz, mit denen Werkzeuge präzise auf einem Dorn gespannt werden können.

Nicht näher dargestellt sind Mittel, mit denen das Gas 15 unter einen definierten Druck gesetzt werden kann. Dies kann im geschlossenen Regelkreis so erfolgen, dass im Raum oberhalb des Ölpegels P ein vorgegebener Druck eingehalten wird.

### Bezugszeichenliste

- 1: Lageranordnung
- 2: erstes Bauteil (Welle)
- 3: zweites Bauteil (Gehäuse)
- 4: Wälzlager
- 5: Innenring
- 6: Außenring
- 7: Wälzkörper
- 8: Aufnahme (Gehäusebohrung)
- 9: Ringelement
- 10: Aufnahmekammer
- 11: Druckfluid (Hydrauliköl)
- 12: Quelle für Druckfluid
- 13: Druckleitung
- 14: Druckbehälter
- 15: Gas

- B: Breite der Aufnahmekammer
- B_{R}: Breite des Lagerrings
- A: Achse des Wälzlagers
- P: Ölpegel

## Patentansprüche

1. Lageranordnung (1) zur Lagerung eines ersten Bauteils (2) relativ zu einem zweiten Bauteil (3), wobei die Lageranordnung (1) mindestens ein Wälzlager (4) mit mindestens einem Innenring (5) und mindestens einem Außenring (6) umfasst, wobei zwischen Innenring (5) und Außenring (6) Wälzkörper (7) angeordnet sind, wobei zwischen einem der Lagerringe (6) und einer Aufnahme (8) im ersten oder zweiten Bauteil (3) ein Ringelement (9) angeordnet ist, wobei das Ringelement (9) eine Aufnahmekammer (10) für ein Druckfluid (11) aufweist und wobei die Aufnahmekammer (10) fluidisch mit einer Quelle (12) mit unter Druck gesetztem Druckfluid (11) verbunden ist,
**dadurch gekennzeichnet, dass**
die Aufnahmekammer (10) mit der Quelle (12) über eine Druckleitung (13) verbunden ist, wobei die Quelle (12) für unter Druck gesetztes Druckfluid (11) einen Druckbehälter (14) umfasst, in dem Druckfluid (11) eingefüllt ist, und wobei sich im Druckbehälter (14) oberhalb eines Ölpegels (P) ein unter Druck gesetztes Gas (15) befindet.

2. Lageranordnung nach Anspruch 1, **dadurch gekennzeichnet, dass** das Ringelement (9) zwischen dem Außenring (6) des Wälzlagers (4) und einem zweiten Bauteil (3) in Form eines Gehäuses angeordnet ist, wobei die Aufnahme (8) für den Außenring (6) durch eine Bohrung im Gehäuse gebildet wird.

3. Lageranordnung nach Anspruch 1 oder 2, **dadurch gekennzeichnet, dass** das Ringelement (9) eine hohlzylindrische Form aufweist.

4. Lageranordnung nach Anspruch 3, **dadurch gekennzeichnet, dass** die Aufnahmekammer (10) im Ringelement (9) eine hohlzylindrische Form aufweist.

5. Lageranordnung nach Anspruch 4, **dadurch gekennzeichnet, dass** die Breite (B) der hohlzylindrischen Aufnahmekammer, gemessen in Richtung der Achse (A) des Wälzlagers (4), mindestens 80 % der Breite (B_{R}) des angrenzenden Lagerrings (6) beträgt.

6. Lageranordnung nach einem der Ansprüche 1 bis 5, **dadurch gekennzeichnet, dass** das Wälzlager (4) ein Zylinderrollenlager ist.

7. Lageranordnung nach einem der Ansprüche 1 bis 6, **dadurch gekennzeichnet, dass** das Wälzlager (4) frei ist von einer Axiallagerfunktion und ausschließlich radiale Kräfte überträgt.
